# EUROPEAN PATENT APPLICATION

(11) **EP 2 352 140 A1**
(43) Date of publication of application: **03.08.2011**
(21) Application number: 10158239.3
(22) Date of filing: 29.03.2010
(51) Int. Cl.: G09G 5/00, G09G 5/26

(54) **Method and apparatus for display screen reorientation**

(30) Priority: 04.12.2009 US 631012
(71) Applicant: Samsung Electronics Co., Ltd., Suwon-si, Gyeonggi-do (KR)
(72) Inventor: Ko, Young-chae, Seoul (KR); Lee, Sung-kyo, Hwaseong-si Gyeonggi-do (KR)
(74) Representative: Hewett, Jonathan Michael Richard

(57) **Abstract**

Provided are an apparatus and method thereof for controlling a display screen of an apparatus using a controller of the apparatus, wherein the display screen is rotatable from a first position to a second position, the method including: displaying content on at least a portion of the display screen, as the display screen is in the first position, wherein the content includes characters having a size; rotating the display screen from the first position to the second position; adjusting the content by changing the a size of the characters; and displaying the adjusted content on the display screen in response to the rotating of the display screen from the first position to the second position, wherein the controller controls the adjusting of the content and the displaying of the adjusted content.

## Description

Apparatuses and methods consistent with the present invention relate to a method and an apparatus for display screen reorientation.

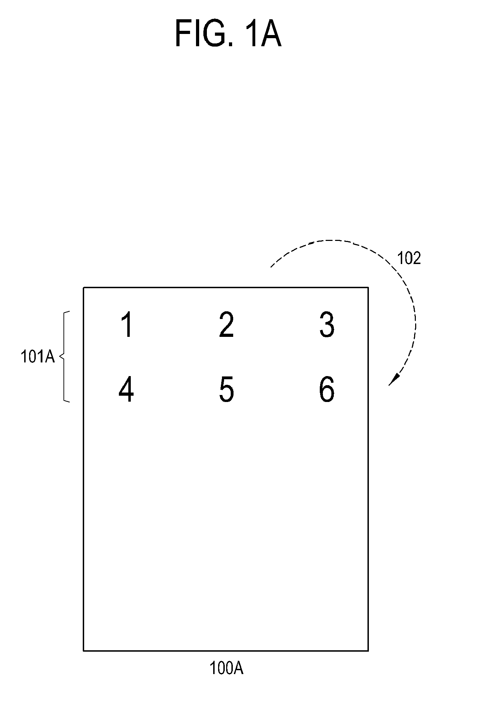

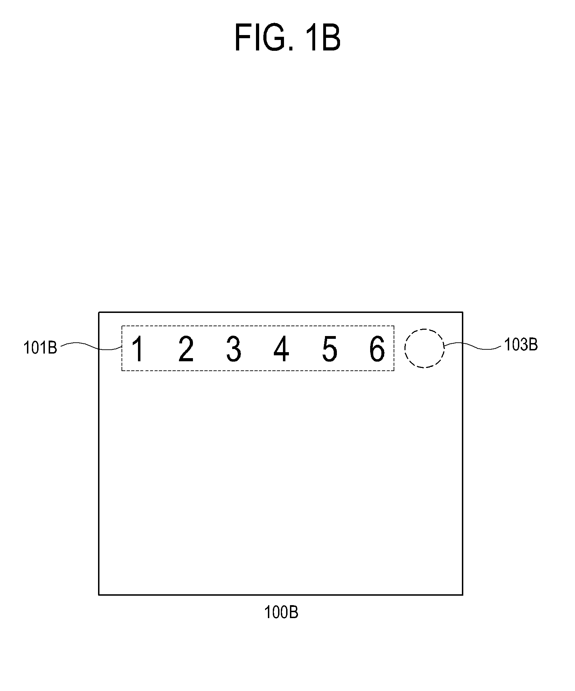

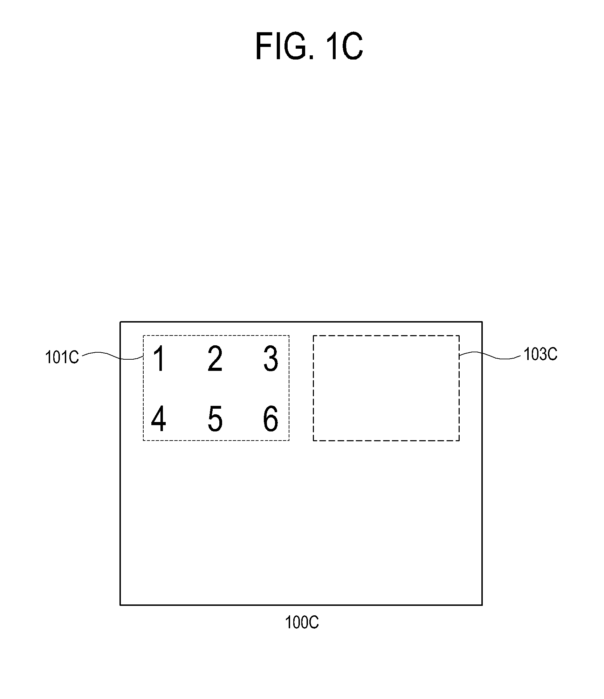

Some modern apparatuses have display screens which are rotatable by a user. As used herein, the term "rotatable" refers to apparatuses having moveable display screens which can be rotated, with respect to the main body of the apparatus, around an axis of the apparatus, and also those apparatuses having a fixed display screen which can be rotated together with the main body of the apparatus so as to change the orientation of the content displayed on the display screen. When a user attempts to rotate such a display screen, the screen is typically reoriented so as to correspond with the viewpoint of the user. The phrase "display screen" as used herein includes any type display screen which is capable of rotation by a user. For example, such a display screen may include a personal data assistant, (PDA), a mobile phone, a monitor, a television, etc. Further, as used herein, the term "content" includes text in the form of letters, symbols and/or numbers, etc. FIGS. 1A, 1B and 1C show the operation of such a related art apparatus. In FIG. 1A, the display screen 100A of an apparatus is shown to be in a vertically-oriented (hereinafter "portrait") position. In this example, the content (i.e., characters corresponding to the numbers 1-6 (101A)) is shown as being displayed in the displayable area of the display screen 100A. A user may then decide to rotate the display screen so as to be horizontally-oriented (hereinafter "landscape") position. The arrow 102 shows the direction of rotation of the display screen 100A from the portrait position toward the landscape position. One of skill in the art would understand that the display screen 100A could be made so as to rotate in the opposite direction from the arrow 102 shown in FIG. 1A; similarly, the display screen 100A could also be made so as to rotate in both directions.

FIG. 1B shows the display screen 100B in the landscape position after the user rotates the display screen 100B to the landscape position. The related art apparatus then changes the displaying of the numbers 101B so as to correspond with the new orientation of the display screen 100B in the landscape position. In this example, the change in the number of columns resulting from the rotation of the display screen 100B into the landscape position may be utilized, however, the size of the numbers 101B is not changed resulting in the wasted space 103B.

Alternatively, as shown in FIG. 1C, if the user rotates the display screen 100C to the landscape position, the related art apparatus then changes the displaying of the numbers 101C so as to correspond with the new orientation of the display screen 100C in the landscape position. In this example, the change in the number of columns is disregarded, since the display of the content in the landscape position (e.g., the numbers 101C in the above examples) simply redisplays the numbers 101C in the same format as was displayed prior to the rotation of the display screen (i.e., as in FIG. 1A). Thus, this related art apparatus fails to reformat the display of the content so as to utilize the new columns resulting from the rotation of the display screen to the landscape position. As a result, the displayed content may not be optimized for readability, and again, there may be wasted space such as 103C.

Aspects of the present invention provide a method and apparatus for controlling a display screen of an apparatus using a controller of the apparatus, wherein the display screen is rotatable from a first position to a second position.

According to an exemplary embodiment of the present invention, the apparatus may include: a display screen which is operable to display content, and which is rotatable from a first position to a second position; a memory operable to store the content; a content adjusting unit operable to read the content from the memory and to adjust the content read from the memory; a controller, which controls the display to display the content on at least a portion of the display screen if the display screen is in the first position, and if the display screen rotated to the second position, the controller controls the content adjusting unit to read the content from the memory and adjust the content read from the memory, and controls the display screen to display the adjusted content, wherein the content is adjusted by the content adjusting unit so that the displayed adjusted content occupies substantially all of the display screen.

According to an exemplary embodiment of the present invention, the content adjusting unit may adjust the content by resizing the content.

According to an exemplary embodiment of the present invention, the content may include characters having a font size, and wherein the content adjusting unit may resize the content by changing the font size.

According to an exemplary embodiment of the present invention, the content adjusting unit may change the font size by increasing the font size.

According to an exemplary embodiment of the present invention, the controller may control the display screen to display the adjusted content after the display screen is in the second position.

According to an exemplary embodiment of the present invention, the display screen may be divided into columns, and a number of columns available in the first position is different from a number of columns available in the second position.

According to an exemplary embodiment of the present invention, the content adjusting unit may adjust the content by resizing the content so as to occupy all of the columns available in the second position.

According to an exemplary embodiment of the present invention, the apparatus may be a mobile device.

According to an exemplary embodiment of the present invention, the first position may correspond to a portrait orientation and the second position corresponds to a landscape orientation.

According to another exemplary embodiment of the present invention, the apparatus may include: a display screen which is rotatable from a first position to a second position and which is operable to display content, wherein the display screen includes a first set of columns while in the first position and a second set of columns while in the second position, wherein each column of the first set of columns is wider than each column in the second set of columns; a content adjusting unit operable to increase a size of the content so as to fit into the second set of columns; a controller, wherein if the display screen is in the second position, the controller controls the content adjusting unit to increase the size of the content so as to fit into the second set of columns, and controls the display screen to display the adjusted content.

According to another exemplary embodiment of the present invention, the apparatus may include: a display screen which is rotatable from a portrait orientation to a landscape orientation and which is operable to display content, wherein the display screen has N columns while in the portrait orientation and in the landscape orientation, and wherein R_{1P} denotes a first row of content displayed on the display screen while in the portrait orientation and R_{1L} denotes a first row of content displayed on the display screen while in the landscape orientation; a controller, wherein if the display screen is rotated to the landscape orientation, the controller adjusts the content in R_{1P} so as to distribute the content in R_{1P} evenly across the N columns of the display screen while in the landscape position, and controls the display screen to display R_{1L} which includes the adjusted content.

According to an exemplary embodiment of the present invention, the method may include: displaying content on at least a portion of the display screen, as the display screen is in the first position, wherein the content includes characters having a size; rotating the display screen from the first position to the second position; adjusting the content by changing the a size of the characters; and displaying the adjusted content on the display screen in response to the rotating of the display screen from the first position to the second position, wherein the controller controls the adjusting of the content and the displaying of the adjusted content.

According to an exemplary embodiment of the present invention, the changing of the size of the characters includes changing the font size.

According to an exemplary embodiment of the present invention, the changing of the font size may include increasing the font size.

According to an exemplary embodiment of the present invention, the displaying of the adjusted content may be performed after the display screen is in the second position.

According to an exemplary embodiment of the present invention, the display screen may be divided into columns and the content is displayed in each of the columns, and wherein the columns available in the second position are wider than columns available in the first position.

According to an exemplary embodiment of the present invention, the adjusting of the content may include resizing the content such that the content displayed in each of the columns is increased to occupy the wider columns available in the second position.

According to an exemplary embodiment of the present invention, the apparatus may be a mobile device.

According to an exemplary embodiment of the present invention, the first position may correspond to a portrait orientation and the second position may correspond to a landscape orientation.

The above and/or other aspects of the present invention will become apparent and more readily appreciated from the following description of the exemplary embodiments, taken in conjunction with the accompanying drawings of which:
FIGS. 1A, 1B and 1C illustrate examples of a related art apparatus;
FIGS. 2A and 2B illustrate an example of an operation according to an exemplary embodiment of the present invention;
FIG. 3 illustrates an example of an operation according to an exemplary embodiment of the present invention;
FIG. 4 illustrates an example of an apparatus according to an exemplary embodiment of the present invention;
FIG. 5 illustrates an example of an operation according to exemplary embodiment of the present invention;
FIG. 6 illustrates an example of an operation according to exemplary embodiment of the present invention; and
FIG. 7 illustrates an example of an operation according to exemplary embodiment of the present invention.

Hereinafter, exemplary embodiments of the present invention will be described with reference to accompanying drawings, wherein like numerals refer to like elements and repetitive descriptions will be avoided as necessary.

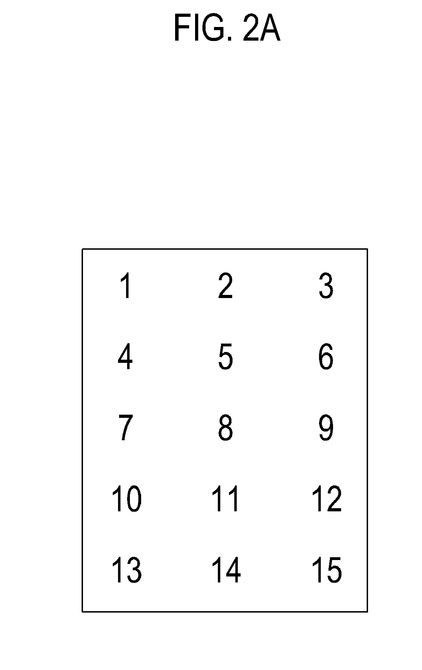

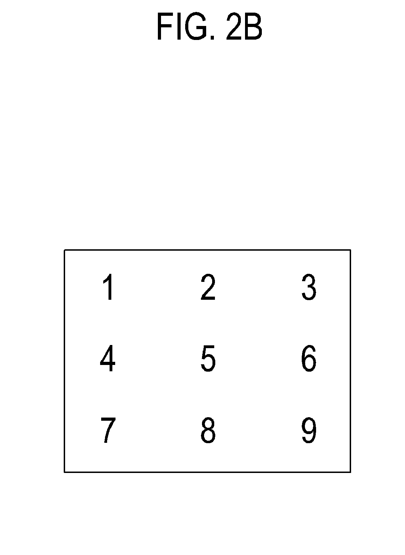

FIGS. 2A and 2B illustrate a basic operation according to an exemplary embodiment of the present invention. In FIG. 2A, the display screen is in the portrait position and displaying the content "1 2 3" in the first row, "4 5 6" in the second row, etc. When the display screen is rotated to a landscape position, as shown in FIG. 2B, the content is automatically rewritten, but enlarged so as to fully occupy substantially all the available area of the display screen. That is, according to an exemplary embodiment of the present invention, the content displayed in each of the rows in FIG. 2A is the same as the content displayed in each of the rows in FIG. 2B, but the size of the individual components of the content (in this case, characters in the form of the numbers "1," "2," "3," ... etc.) displayed in FIG. 2B are larger (e.g., by increasing the font size), than they were in FIG. 2A.

It should be noted that while the above example shows the content (e.g., characters) being enlarged from a smaller size in the portrait position to a larger size in the landscape position, the present invention is not limited to this specific example. Instead, one of skill in the art would recognize that in some cases, readability may be improved by actually putting more text on the screen while in the landscape position. In that case, the content may be resized so as to go from a larger size in the portrait position to a larger size in the landscape position.

Additionally one of skill in the art would readily understand that the reverse process is also within the scope of the present invention. That is, if the display screen is rotated from the landscape position to the portrait position, the content can be resized accordingly (e.g., made smaller or larger depending on the preference of the user).

Further, while the above example describes changing the font size of a character as a way of changing the size of the character, one of skill in the art would recognize that there are other ways of changing the size of a character without technically changing the font size. For example, the image character can simply undergo a transformation which increases its apparent size. Also, the character's size may be altered while maintaining a certain scale (i.e., horizontal/vertical proportionality, or aspect ratio), or alternatively, a character's aspect size may be altered while simultaneously altering its aspect ratio. For example, a letter may be stretched so as to appear taller or wider than normal. Similarly, the row and/or column size can of the display screen can be changed and the content can be resized so as to fit (i.e., substantially occupy) the resized rows and/or columns.

It should be noted that some of the above-mentioned techniques for resizing content may be performed separately, or in conjunction with one another. For example, depending on the operation of the particular display device, changing the font size may, in fact, also require a changing of the row and/or column size. However, the present invention is not limited to any one particular technique or combination of techniques.

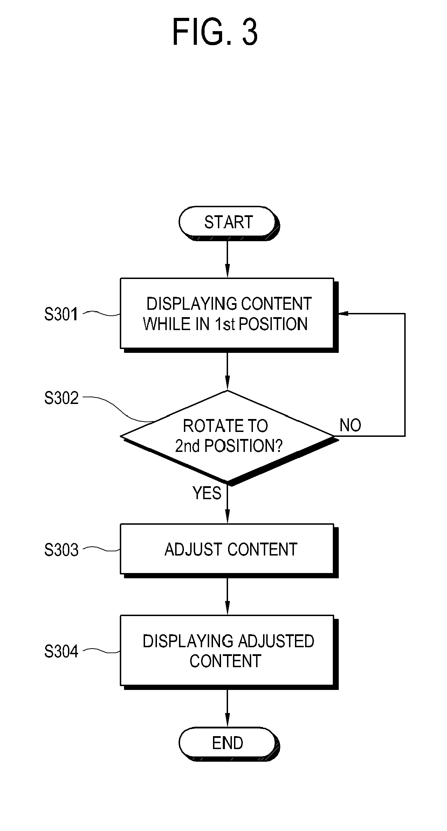

FIG. 3 illustrates another operation according to an exemplary embodiment of the present invention. In operation S301, the display screen displays the content while in a first position (e.g., the portrait position). Next, in operation S302-Y, a determination is made as to whether the display screen is rotated toward the second position. If the display screen is rotated toward the second position (S302-Y), the content is adjusted to accommodate the second position (S303). Otherwise the display screen continues to display the content as formatted for the first position (S302-N). Once the content has been adjusted, the adjusted content is displayed on the display screen (S304).

It should be noted that while this example describes making a determination as to whether the display screen is rotated toward the second position (i.e., in operation S302-Y), the determination can be made during the actual rotation or at the completion of said rotation. That is, the adjusting operation (S303) may begin as soon as the display screen begins rotation toward the second position, or after the display screen has completed its rotation to the second position.

Additionally, the above example generically describes a "first position" and a "second position," which is to say that the "first position" could correspond to the portrait position while the "second position" corresponds to the landscape position, or alternatively, the "first position" could correspond to the landscape position while the "second position" corresponds to the portrait position.

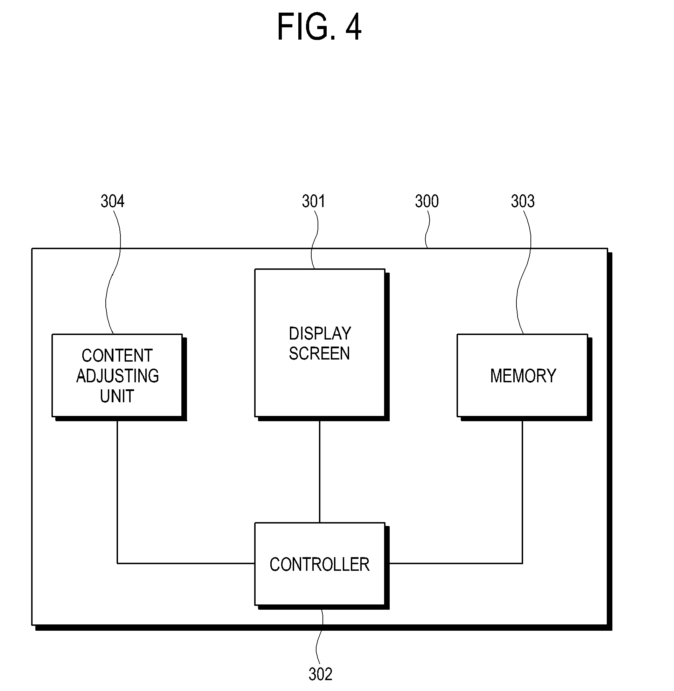

FIG. 4 illustrates an example of an apparatus according to an exemplary embodiment of the present invention. As shown in FIG. 4, the apparatus 300 includes a display screen 301, a controller 302, a memory 303 and a content adjusting unit 304. The content itself is stored in the memory 303. The display screen 301 displays the content in both the first and second positions. If the controller 302 determines that the display screen 301 is rotated toward the second position, the controller 302 controls the content adjusting unit 304 to adjust the content in the memory 303 so as to accommodate the display screen 301 being in the second position. The adjusted content can be stored in the memory 303, and then the controller 302 can control the display screen 301 to display the adjusted content stored in the memory 303.

In the above example, the content adjusting unit 304 is illustrated as a separate element so as to facilitate an easier understanding of the exemplary embodiment. One of skill in the art would recognize that the controller could perform the operations performed by the content adjusting unit 304, and thus, the content adjusting unit 304 may not be necessary to be within the scope of the present invention (i.e., as a physically separate element).

Additionally, it should be noted that the connections between the components illustrated in FIG. 4 are drawn in a specific way simply as a matter of convenience. One of skill in the art would recognize that the connections could be established in different ways while still accomplishing the operations described herein so as to be within the scope of the present invention. For example, a direct connection may exist between the memory 303 and the display screen 301, or the content adjusting unit 304 and memory 303, etc.

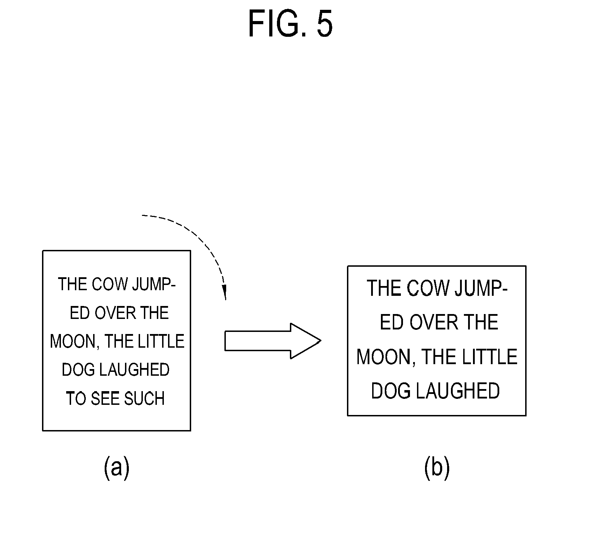

FIG. 5 illustrates an example of how content can be adjusted from being displayed on a display screen in a first position to being displayed on a display screen in a second position. In this case, the first position corresponds to the portrait position, and the second position corresponds to the landscape position. Also, in this example, the content corresponds to text in the form of characters from the English alphabet. In FIG. 5, the first row of text reads "the cow jump-" the second row reads "ed over the" etc. While the display screen is in the portrait position (FIG. 5(a)), the text is a normal size. The arrow at the top of FIG. 5(a) indicates the rotation toward the landscape position shown in FIG. 5(b). The content is then adjusted and redisplayed in FIG. 5(b) in the landscape position. As shown in FIG. 5, the size of the individual characters is enlarged going from the portrait position to the landscape position. As noted above, the font size may be increased, for example, as a way of accomplishing the apparent size change.

Additionally, as shown in FIG. 5(b), the size of the characters has changed, but the characters displayed in each row have not. That is, the text within each row (i.e., the letters, words and symbols) in FIG. 5(a) is the same as the text that appears on each row in FIG. 5(b). However, in FIG. 5(b), the size of each of the characters has changed to accommodate the rotation from the portrait position to the landscape position. Again, the content displayed in each of the rows in FIG. 5(a) is the same as the content displayed in each of the rows in FIG. 5(b), but the size of the individual components of the content (i.e., characters in the form of the numbers "1," "2," "3," ... etc.) displayed in FIG. 5(b) are larger than in FIG. 5(a).

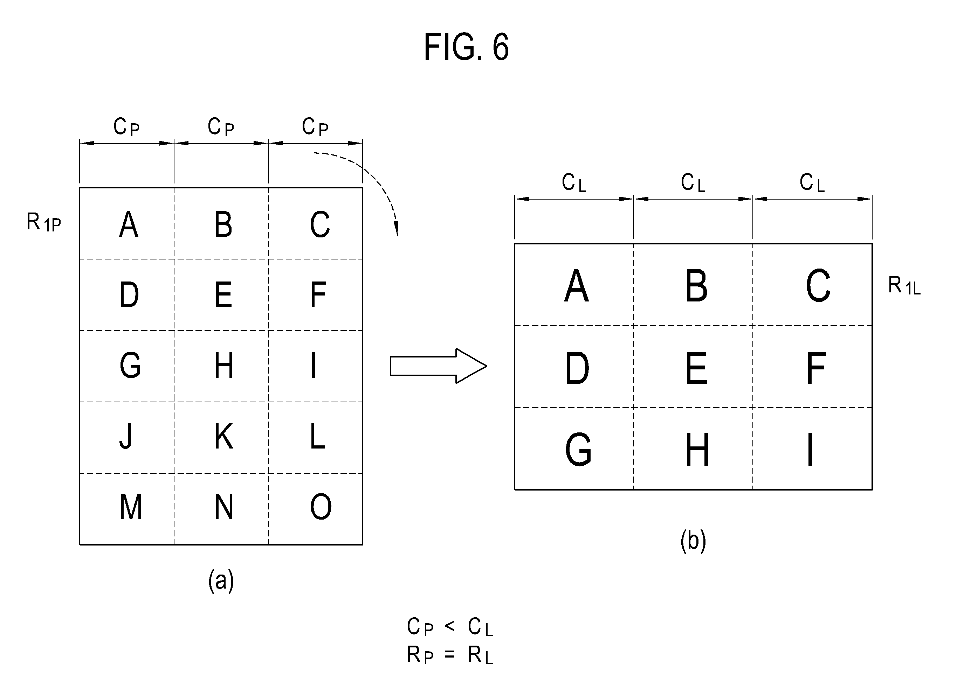

FIG. 6 illustrates an example of another operation according to an exemplary embodiment of the present invention. As shown in FIG. 6(a), the display screen is in a portrait position, and in the landscape position in FIG. 6(b). The arrow at the top of FIG. 6(a) indicates the rotation toward the landscape position shown in FIG. 6(b). In FIG. 6(a), the first row of the display screen is denoted as "R_{1P}." The characters written in each of the columns of R_{1P} are "A," "B" and "C." The columns in the portrait position are denoted "Cₚ," and the width of each of the columns is shown in FIG. 6(a). The first row of the display screen while in the landscape position is denoted "R_{1L}." As shown in FIG. 6(b), the characters that were in R_{1P} are also displayed in the first column of the display screen while in the landscape position. That is, the content displayed in the first row hasn't changed. The size of the content, however, has changed, in this case, whereby the individual characters are larger. In this example, the row size (i.e., height) is held constant, but the column size (i.e., width) is varied.

In the example of FIG. 6, the width of each of the columns in the landscape position (denoted "C_{L}") is larger than the width of each of the columns in the landscape position (denoted "Cₚ"). Thus, the size of the characters can be changed to fit into the new column size (e.g., by resizing the individual characters so as to substantially occupy all of the available space in the respective row/column position).

Again, the example of FIG. 6 is simply one exemplary embodiment and the present invention is not limited thereto. For example, the column resizing technique shown in FIG. 6 can be applied in reverse (e.g., when going from a landscape position to a portrait position). In that case, the columns could be made to become smaller in size, and thus the display text could be automatically reduced. On the other hand, some users may prefer to have the text reduced when going from the portrait position to the landscape position, or vice versa.

As noted above, in the exemplary embodiment of FIG. 6, the display screen column size in the portrait position is smaller than the display screen column size in the portrait position (i.e., Cₚ < C_{L}), but the row size is depicted as being the same. However, both the rows and the columns could be resized so as to accommodate a resizing of displayed content corresponding to a changing of the display screen from one position to another.

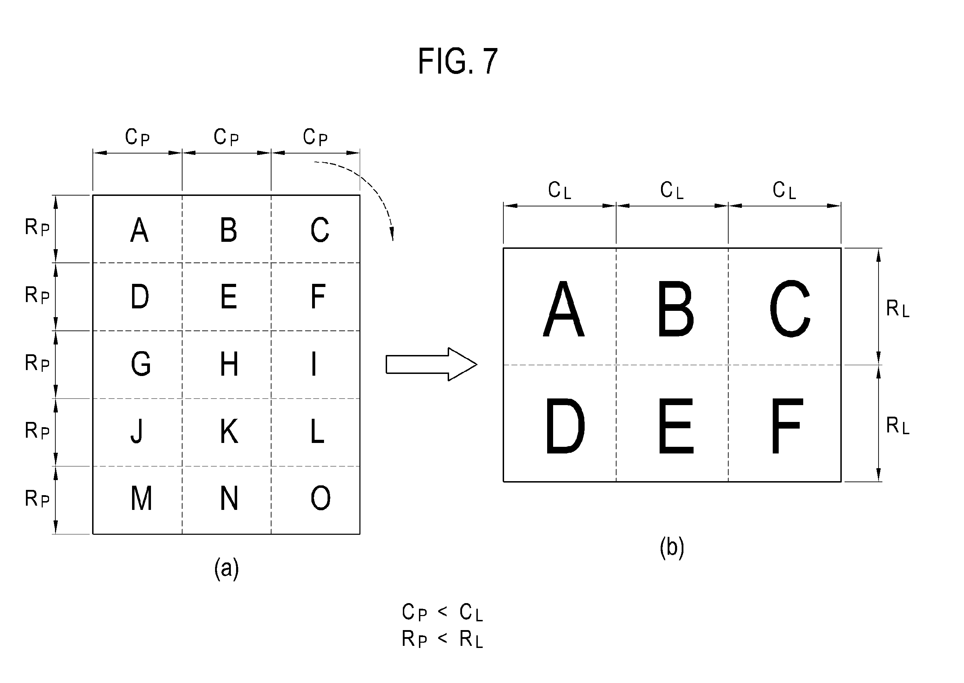

For example, in the exemplary embodiment illustrated in FIG. 7(a), the rows and columns of the display screen are shown to be the same as in FIG. 6(a). Again, the arrow at the top of FIG. 7(a) indicates the rotation toward the landscape position shown in FIG. 7(b). In this case however, both the rows and the columns of the display screen are enlarged to make the content of each row appear even larger (and perhaps more readable) while in the landscape position. Similar to FIG. 6(a), FIG. 7(a) shows the row size as being "R_{P}" and column size as "C_{P}" while the display screen is in the portrait position. Likewise, FIG. 7(b) shows a row size of "R_{L}" and column size as "C_{L}" while the display screen is in the landscape position. However, unlike in FIG. 6(b), in this example, R_{P} < R_{L} and C_{P} < C_{L}. The result is that less of the content (i.e., the characters "A," "B," "C," etc.) can be displayed while in the landscape position. Nevertheless, the content of each row is maintained, and the size of the individual characters is enlarged even more than in FIG. 6.

As with the exemplary embodiment of FIG. 6, variations in the exemplary embodiment of FIG. 7 (e.g., decreasing the size of the displayed characters when going from portrait to landscape, etc.) are equally possible, and thus within the scope of the present invention.

The foregoing exemplary embodiments are merely exemplary and should not be construed as limiting the present invention. The present teaching can be readily applied to other types of methods and apparatuses. Also, the description of the exemplary embodiments of the present invention is intended to be illustrative, and not to limit the scope of the claims, and many alternatives, modifications, and variations will be apparent to those skilled in the art.

## Claims

1. An apparatus (300) comprising:
a display screen (301) operable to display content, and rotatable from a first position to a second position;
a memory (303) operable to store the content;
a content adjusting unit (304) operable to read the content from the memory and to adjust the content read from the memory;
a controller (302) controlling the display to display the content on at least a portion of the display screen if the display screen is in the first position, and if the display screen rotated to the second position, controlling the content adjusting unit to read the content from the memory and adjust the content read from the memory, and controlling the display screen to display the adjusted content, wherein the content is adjusted by the content adjusting unit so that the displayed adjusted content occupies substantially all of the display screen.

2. The apparatus according to claim 1, wherein the content adjusting unit (304) adjusts the content by resizing the content.

3. The apparatus according to claim 1 or claim 2, wherein the content includes characters having a font size, and wherein the content adjusting unit (304) resizes the content by changing the font size.

4. The apparatus according to any one of claims 1 to 3, wherein the controller (302) controls the display screen to display the adjusted content after the display screen is in the second position.

5. The apparatus according to any one of the preceding claims, wherein the display screen (301) is divided into columns and the controller (302) controls the content to be displayed in each of the columns, and wherein the columns available in the second position are wider than columns available in the first position.

6. The apparatus according to claim 5, wherein the content adjusting unit (304) adjusts the content by resizing the content such that the content displayed in each of the columns is increased to occupy the wider columns available in the second position.

7. The apparatus according to any one of claims 1 to 4, wherein the first position corresponds to a portrait orientation and the second position corresponds to a landscape orientation.

8. The apparatus according to any one of claims 1 to 4, wherein the content includes characters, wherein display screen (301) is divided into rows and the characters are displayed in each of the rows, and wherein characters displayed in a first row of the display screen while in the first position are the same as characters displayed in a first row of the display screen while in the second position.

9. A method for controlling a display screen of an apparatus using a controller of the apparatus, wherein the display screen is rotatable from a first position to a second position, the method comprising:
displaying content on at least a portion of the display screen, as the display screen is in the first position, wherein the content includes characters having a size;
rotating the display screen from the first position to the second position;
adjusting the content by changing the a size of the characters; and
displaying the adjusted content on the display screen in response to the rotating of the display screen from the first position to the second position,
wherein the controller controls the adjusting of the content and the displaying of the adjusted content.

10. The method according to claim 9, wherein the changing of the size of the characters includes changing the font size.

11. The method according to claim 9 or claim 10, wherein the displaying of the adjusted content is performed after the display screen is in the second position.

12. The method according to any one of claims 9 to 11, wherein the display screen is divided into columns and the content is displayed in each of the columns, and wherein the columns available in the second position are wider than columns available in the first position.

13. The method according to claim 12, wherein the adjusting of the content includes resizing the content such that the content displayed in each of the columns is increased to occupy the wider columns available in the second position.

14. The method according to any one of claims 9 to 11, wherein the first position corresponds to a portrait orientation and the second position corresponds to a landscape orientation.

15. The method according to any one of claims 9 to 11, wherein the display screen is divided into rows and the characters are displayed in each of the rows, and wherein characters displayed in a first row of the display screen while in the first position are the same as characters displayed in a first row of the display screen while in the second position.
